# EUROPÄISCHE PATENTANMELDUNG

(11) **EP 4 138 254 A1**
(43) Veröffentlichungstag der Anmeldung: **22.02.2023**
(21) Anmeldenummer: 21192398.2
(22) Anmeldetag: 20.08.2021
(51) Int. Cl.: H02J 7/00

(54) **VERFAHREN ZUM SCHNELLLADEN EINES AKKUMULATORS**

(71) Anmelder: Hilti Aktiengesellschaft, 9494 Schaan (LI)
(72) Erfinder: Landesfeind, Johannes, 82407 Wielenbach (DE); Braun, Philipp, 87600 Kaufbeuren (DE); Dattatreya, Roy, 89075 Ulm (DE)
(74) Vertreter: Hilti Aktiengesellschaft Corporate Intellectual Property

(57) **Zusammenfassung**

Verfahren zum Steuern und Regeln eines Akkumulators mit wenigstens einer Energiespeicherzelle, wenigstens einen Temperatursensor zum Erfassen wenigstens eines Temperaturwertes des Akkumulators, eine Strommesseinrichtung, eine Spannungsmesseinrichtung sowie eine Akku-Steuerungseinrichtung mit wenigstens einer Akku-Speichereinrichtung enthält.

Das Verfahren enthält die Verfahrensschritte:
- Einstellen eines ersten Ladestromwertes zum Laden des Akkumulators;
- Laden des Akkumulators mit dem ersten Ladestromwert bis zum Erreichen eines ersten Temperaturwertes;
- Einstellen eines zweiten Ladestromwertes zum Laden des Akkumulators zum Halten des ersten Temperaturwertes für eine erste vorbestimmte Zeitdauer;
- Einstellen eines dritten Ladestromwertes zum Laden des Akkumulators nach Ablauf einer zweiten vorbestimmten Zeitdauer; und
- Einstellen eines ersten Spannungswertes nach Ablauf der zweiten vorbestimmten Zeitdauer.

Akkumulator und Ladegerät zum Durchführen des Verfahrens.

## Beschreibung

Die vorliegende Erfindung betrifft ein Verfahren zum Steuern und Regeln eines Akkumulators zur Versorgung einer Werkzeugmaschine mit elektrischer Energie, wobei der Akkumulator wenigstens eine Energiespeicherzelle, wenigstens einen Temperatursensor, eine Strommesseinrichtung, eine Spannungsmesseinrichtung sowie eine Akku-Steuerungseinrichtung mit wenigstens einer Akku-Speichereinrichtung enthält.

Des Weiteren betrifft die vorliegende Erfindung einen Akkumulator zum Durchführen des Verfahrens.

Darüber hinaus betrifft die vorliegende Erfindung ein Ladegerät zum Durchführen des Verfahrens.

Akkumulatoren werden oftmals zur Versorgung unterschiedlicher Vorrichtungen bzw. Maschinen mit elektrischer Energie verwendet. Die Verwendung von Akkumulatoren zur Versorgung von Werkzeugmaschinen, wie z.B. Bohrmaschinen, Bohrhämmer, Sägen, Schleifgeräte, Schrauber oder dergleichen, ist ebenfalls weitestgehend bekannt. Üblicherweise weisen Akkumulatoren eine Vielzahl an Energiespeicherzellen (auch Zellen oder Akku-Zellen genannt) zum Speichern bzw. Bereitstellen der elektrischen Energie auf. Die Technologie der Energiespeicherzellen kann dabei z.B. auf Li-Ion, Li-Polymer, Li-Metal, Ni-Cd, Ni-MH oder dergleichen basieren.

Zum Laden des Akkumulators mit elektrischer Energie wird für gewöhnlich ein Ladegerät verwendet. Der Akkumulator wird hierzu wiederlösbar mit dem Ladegerät verbunden, sodass ein Ladestrom zum Laden des Akkumulators eingestellt werden kann.

Der Ladevorgang des Akkumulators kann lange dauern, insbesondere wenn die Energiespeicherzellen des Akkumulators vollständig oder nahezu vollständig mit elektrischer Energie geladen werden sollen. Ein zeitintensives Laden eines Akkumulators kann ein Problem darstellen, wenn beispielsweise lediglich ein einziger Akkumulator als Energieversorgung für eine Werkzeugmaschine zur Verfügung steht und während des Ladevorgangs die Arbeit mit der Werkzeugmaschine unterbrochen werden muss.

Es ist somit Aufgabe der vorliegenden Erfindung das vorstehend erwähnte Problem zu lösen und Verfahren zum Steuern und Regeln eines Akkumulators bereitzustellen, welches ein möglichst schnelles Laden eines Akkumulator gewährleisten kann. Darüber hinaus ist es auch Aufgabe einen Akkumulator sowie ein Ladegerät zum Durchführen des Verfahrens bereitzustellen, wodurch ein möglichst schnelles Laden eines Akkumulator gewährleisten kann.

Die Aufgabe wird gelöst durch den Gegenstand in Anspruch 1, 5 und 6. Vorteilhafte Ausführungsformen sind in den entsprechenden Unteransprüchen aufgeführt.

Die Aufgabe wird dabei gelöst durch ein Verfahren zum Steuern und Regeln eines Akkumulators zur Versorgung einer Werkzeugmaschine mit elektrischer Energie, wobei der Akkumulator wenigstens eine Energiespeicherzelle, wenigstens einen Temperatursensor, eine Strommesseinrichtung, eine Spannungsmesseinrichtung sowie eine Akku-Steuerungseinrichtung mit wenigstens einer Akku-Speichereinrichtung enthält.

Erfindungsgemäß enthält das Verfahren die Verfahrensschritte:
- Einstellen eines ersten Ladestromwertes zum Laden des Akkumulators;
- Laden des Akkumulators mit dem ersten Ladestromwert bis zum Erreichen eines ersten Temperaturwertes;
- Einstellen eines zweiten Ladestromwertes zum Laden des Akkumulators zum Halten des ersten Temperaturwertes für eine erste vorbestimmte Zeitdauer;
- Einstellen eines dritten Ladestromwertes zum Laden des Akkumulators nach Ablauf einer zweiten vorbestimmten Zeitdauer; und
- Einstellen eines ersten Spannungswertes nach Ablauf der zweiten vorbestimmten Zeitdauer.

Der erste Temperaturwert beträgt dabei nahezu dem maximal möglichen Temperaturwert bevor die Akku-Steuerungseinrichtung ein weiteres Laden des Akkumulators wegen Überhitzung unterbricht. Die Ladestromstärke kann auch als Ladestrom oder Ladestromwert bezeichnet werden.

Entsprechend einer vorteilhaften Ausgestaltung der vorliegenden Erfindung kann es möglich sein, dass bei dem ersten Temperaturwert die Energiespeicherzellen den geringsten Innenwiderstand aufweisen. Hierdurch können die Energiespeicherzellen am schnellsten mit elektrischer Energie geladen werden.

Gemäß einer vorteilhaften Ausgestaltung der vorliegenden Erfindung kann es möglich sein, dass der erste Ladestromwert einem Wert zwischen 16 und 20 A, insbesondere 18 A entspricht.

Entsprechend einer vorteilhaften Ausgestaltung der vorliegenden Erfindung kann es möglich sein, dass der zweite Ladestromwert einem Wert zwischen 10 und 14 A, insbesondere 12 A entspricht.

Der zweite Ladestromwert beträgt gemäß einer vorteilhaften Ausführungsform der vorliegenden Erfindung zwei Drittel (d.h. 2/3) des ersten Ladestromwertes. Gemäß einer alternativen Ausführungsform der vorliegenden Erfindung kann der zweite Ladestromwert auch nur die Hälfte (d.h. 50%) des ersten Ladestromwerts betragen. Des Weiteren kann der zweite Ladestromwert auch zwischen 20 bis 70 % des ersten Ladestromwerts betragen. Der zweite Ladestromwert ist jedoch stets geringer als der erste Ladestromwert.

Gemäß einer vorteilhaften Ausgestaltung der vorliegenden Erfindung kann es möglich sein, dass der erste Temperaturwert zwischen 55°C und 65°C, insbesondere 60°C entspricht.

Akkumulatoren für die Versorgung einer Werkzeugmaschine enthalten typischerweise Litiumlonen-Zellen (Li-Ion), die mit gewöhnlichen Ladegeräten in der Regel in einem sogenannten CCCV-Verfahren (Constant Current: - konstanter Stromstärke; Constant Voltage: - konstante Spannung) mit elektrischer Energie aufgeladen werden. Dabei generiert eine Ladeelektronik des Ladegeräts einen konstanten Ladestrom durch den Akkumulator (Constant Current - CC), so dass die Akkuspannung steigt. Sobald eine maximale Akkuspannung erreicht ist, wird diese von der Ladeelektronik konstant gehalten (Constant Voltage - CV) und der Ladestrom wird entsprechend reduziert. Ist ein vordefinierter Minimalwert des Ladestroms erreicht, beendet die Ladeelektronik den Ladevorgang und die Akku-Zellen sind vollgeladen. Der Übergang von der CC-Phase zu der CV-Phase erfolgt typischerweise bei einem Ladezustand (d.h. Kapazität) von ungefähr 80%.

Die Akkuspannung des Akkumulators ist in der Regel ein Vielfaches der Spannung einer einzelnen Energiespeicherzelle oder Akku-Zelle und ergibt sich aus der parallelen oder seriellen Verschaltung der Akku-Zellen. Bei Li-Ion-Akku-Zellen mit einer Zellspannung von 3,6 V ergeben sich somit beispielhafte Akkuspannungen von 3,6V, 7,2V, 10,8V, 14,4V, 18V, 36V etc. Bevorzugt ist die Akku-Zelle als zumindest im Wesentlichen zylinderförmige Rundzelle ausgebildet, wobei die Pole der Akku-Zellen an Enden der Zylinderform angeordnet sind. Die elektrische Schnittstelle umfasst insbesondere zumindest zwei elektrische Kontaktelemente, die zur Übertragung von Energie ausgebildet sind.

Alternativ kann die elektrische Schnittstelle aber auch ein sekundäres Ladespulenelement zur induktiven Ladung aufweisen.

Gemäß einer weiteren alternativen Ausgestaltungsform kann die jeweilige Akku-Zelle auch in Form einer sogenannten Pouch-Zelle, d.h. eine Energiespeicherzelle mit einer relativ weichen Außenhülle. Die Pouch-Zelle kann dabei auch als Pouch-Bag-Zelle oder Coffee-Bag-Zelle bezeichnet werden.

In einer besonderen Ausgestaltung der Erfindung wird der Aufladevorgang mit dem CCCV-Verfahren durchgeführt, wobei zur Bestimmung der Restkapazität der erste Ladewert vor der CC-Phase und die weiteren Ladewerte während der CC-Phase und der CV-Phase ermittelt werden. Somit wird vor der CC-Phase die Leerlaufspannung gemessen und im Anschluss ein so genanntes "Coulumb Counting" durchgeführt, das zur Bestimmung der Ladung im Akkumulator die Anzahl der Elektronen erfasst.

Die Restkapazität, die restliche Leistungsfähigkeit und/oder der Gesundheitszustand des Akkumulators können mit besonderem Vorteil auf einer externen Anzeigeeinheit ausgegeben werden.

Dabei kann als Anzeigeeinheit sowohl ein Display (LCD, OLED, ePaper oder dergleichen) als auch eine LED-Anzeige des Akkumulators, des Ladegeräts oder alternativ bzw. ergänzend ein Smartphone, Tablet, PC oder dergleichen dienen.

Die Kommunikation zwischen dem Akkumulator und den genannten Anzeigeeinheiten erfolgt über eine entsprechende Kommunikationsschnittstelle. Dabei kann ein proprietärer BUS (Binary Unit System) verwendet werden, wie eine Übertragung per Standard- Protokolle per Kabel oder Funk.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine Schnittansicht durch einen Akkumulator verbunden mit einem Ladegerät;
- Figur 2: eine Schnittansicht durch den Akkumulator verbunden mit einer Werkzeugmaschine; und
- Figur 3: ein schematische Diagramm zur Darstellung des Strom-, Spannungs- und Temperaturverlaufs während eines Ladevorgangs des Akkumulators.

### Ausführungsbeispiele:

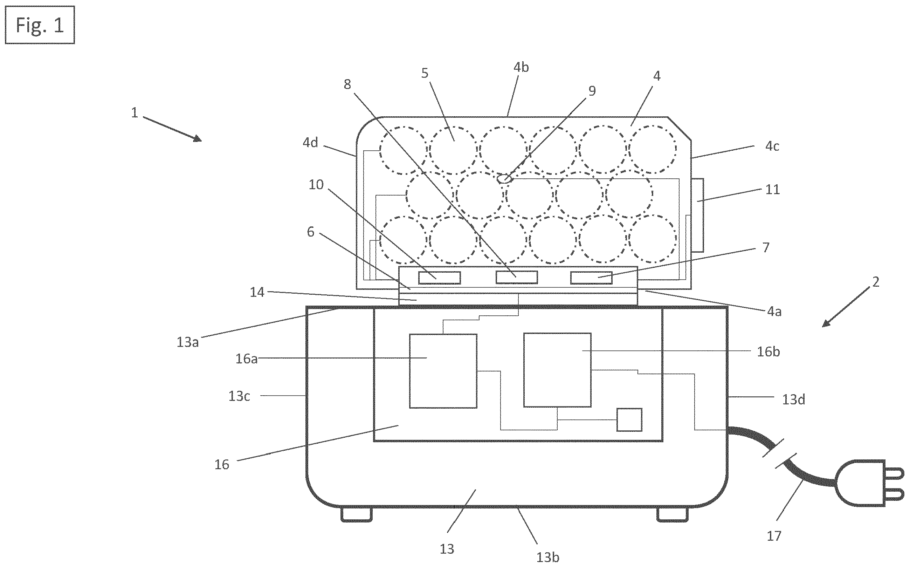

Figur 1 zeigt einen Akkumulator 1 wiederlösbar verbunden mit einem Ladegerät 2.

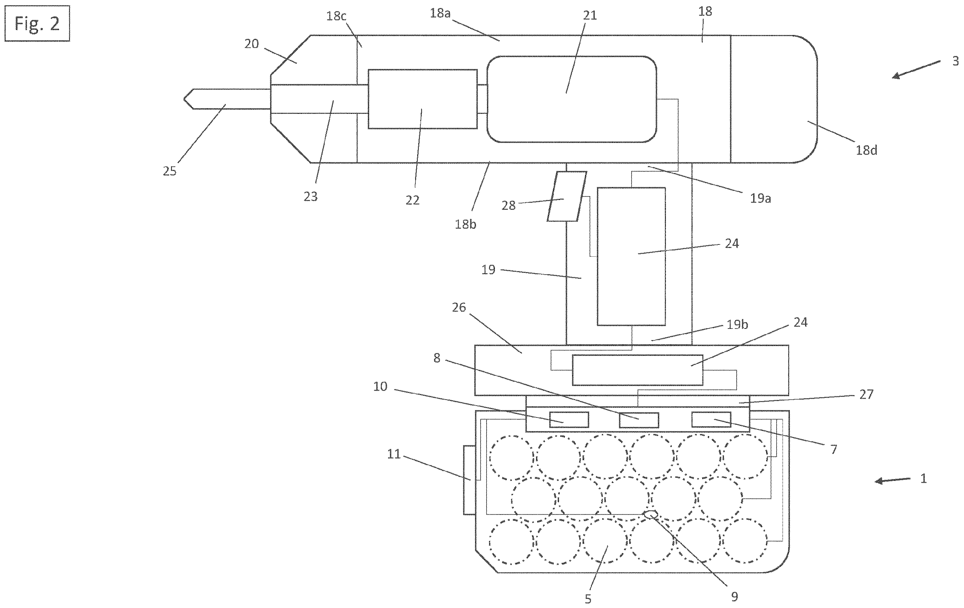

Der Akkumulator 1 kann als Energieversorgung für eine Werkzeugmaschine 3 verwendet werden. Die Werkzeugmaschine 3 ist in Form eines Akku-Schraubers in Figur 2 dargestellt.

Der Akkumulator 1 enthält im Wesentlichen ein Akku-Gehäuse 4, eine Anzahl an Energiespeicherzellen 5, eine Akku-Schnittstelle 6, eine Strommesseinrichtung 7, eine Spannungsmesseinrichtung 8, einen Temperatursensor 9, eine Akku-Speichereinrichtung 10, eine Anzeige- und Eingabeeinrichtung 11 sowie eine Akku-Steuerungseinrichtung 12.

Das Akku-Gehäuse 4 enthält eine Oberseite 4a, eine Unterseite 4b, eine linke Seitenwand, eine rechte Seitenwand, eine Vorderseite 4c und eine Rückseite. In Figur 1 ist lediglich die Oberseite 4a, Unterseite 4b, die Vorderseite 4c und die Rückseite 4d gezeigt.

Die Akku-Schnittstelle 6 ist an der Oberseite 4a des Akku-Gehäuses 4 positioniert und dient zum wiederlösbaren Verbinden des Akkumulators 3 mit dem Ladegerät 2 oder einer Werkzeugmaschine 3. Die Akku-Schnittstelle 6 enthält hierzu eine mechanische Ankopplungseinrichtung, eine elektrische Verbindungseinrichtung sowie einen Kommunikationsanschluss. Weder die mechanische Ankopplungseinrichtung, die elektrische Verbindungseinrichtung noch der Kommunikationsanschluss der Akku-Schnittstelle 6 sind in den Figuren gezeigt.

In den Figuren ist die mechanische Ankopplungseinrichtung, die elektrische Verbindungseinrichtung und der Kommunikationsanschluss der Akku-Schnittstelle 6 nicht gezeigt.

Durch die mechanische Ankopplungseinrichtung kann der Akkumulator 1 form- und kraftschlüssig entweder mit dem Ladegerät 2 oder mit einer Werkzeugmaschine 3 verbunden werden. Mit Hilfe der elektrischen Verbindungseinrichtung kann elektrische Energie von dem Ladegerät 2 zu dem Akkumulator 1 gelangen, wenn der Akkumulator 1 mit dem Ladegerät 2 verbunden ist. Ebenso kann elektrische Energie von dem Akkumulator 1 zu einer Werkzeugmaschine 3 gelangen, wenn de Akkumulator 1 mit der Werkzeugmaschine 3 verbunden ist. Der Kommunikationsanschluss dient dazu, dass Informationen und Daten in Form von Signale zwischen dem Akkumulator 1 und dem Ladegerät 2 bzw. zwischen dem Akkumulator 1 und der Werkzeugmaschine 3 ausgetauscht werden können. Zu den Informationen und Daten können unter anderem Lade- oder Entladeparameter, Temperaturwerte, Ladezustand (State of Charge - SOC), der Gesundheitszustand (State of Health - SOH), (Rest-)Kapazität, Spannung, Stromstärke oder dergleichen gehören.

Die Akku-Steuerungseinrichtung 12 ist im Wesentlichen in der Nähe der Oberseite des Akku-Gehäuses 4 positioniert und dient zum Steuern sowie Regeln der unterschiedlichen Funktionen des Akkumulators 1.

Die Energiespeicherzellen 5 sind im Inneren des Akku-Gehäuses 4 in drei Reihen positioniert, sodass zwischen der zweiten und dritten Reihe der Energiespeicherzellen 5 der Temperatursensor 9 positioniert ist. Der Temperatursensor 9 dient zum Erfassen der Temperatur im Inneren des Akkumulator 1 an einer der zentral positionierten Energiespeicherzellen 5. Der Temperatursensor 9 ist über eine Leitung mit der Akku-Steuerungseinrichtung 12 verbunden. Da die Energiespeicherzellen 5 im Inneren bzw. in der Mitte des Akkumulators 1 während des Lade- oder Entladevorgangs für gewöhnlich die höchsten Temperaturen ausweisen, kann ein Temperatursensor 9, der an dieser zentral positionierten Energiespeicherzelle 5 die Temperatur erfasst, die höchste Temperatur und damit am schnellsten eine kritisch hohe Temperatur für den Akkumulator 1 feststellen.

Des Weiteren ist innerhalb der Akku-Steuerungseinrichtung 12 die Strommesseinrichtung 7, die Spannungsmesseinrichtung 8 und die Akku-Speichereinrichtung 10 enthalten.

Die Strommesseinrichtung 7 dient zum Erfassen bzw. Messen der Stromstärke an den einzelnen Energiespeicherzellen 5. Wie in Figur 1 angedeutet ist die Strommesseinrichtung 7 daher mit jeder einzelnen Energiespeicherzelle 5 verbunden. Durch das Erfassen bzw. Messen der Stromstärke an der einzelnen Energiespeicherzelle 5 kann die Stromstärke für den gesamten Akkumulator 1 ermittelt werden.

Die Spannungsmesseinrichtung 8 dient zum Erfassen bzw. Messen der Spannung an den einzelnen Energiespeicherzellen 5. Wie in Figur 1 angedeutet ist die Spannungsmesseinrichtung 8 daher mit jeder einzelnen Energiespeicherzelle 5 verbunden. Durch das Erfassen bzw. Messen der Spannung an der einzelnen Energiespeicherzelle 5 kann die Spannung für den gesamten Akkumulator 1 ermittelt werden.

Die Speichereinrichtung 10 dient zum Speichern und Bereitstellen unterschiedlichster Informationen und Daten, wie z.B. Look-Up-Tabellen für die verschiedenen Lade- oder EntladeParameter des Akkumulators 1. Zu diesen Parametern gehören unter anderen Temperaturverläufe bzw. Schwellwerte für Spannungen oder Stromstärken.

Die Anzeige- und Eingabeeinrichtung 11, welche auch als Human-Machine-Interface (HMI) bezeichnet werden kann, ist an der Vorderseite des Akku-Gehäuses 4 positioniert. Wie in Figur 1 angedeutet ist die Anzeige- und Eingabeeinrichtung 11 mit der Akku-Steuerungseinrichtung 12 verbunden, sodass unterschiedliche Daten und Informationen auf einem Anzeigeanteil der Anzeige- und Eingabeeinrichtung 11 ersichtlich sind. Insbesondere kann der Ladezustand bzw. die Kapazität des Akkumulators 1 auf dem Anzeigeanteil angezeigt werden.

Auf einem Eingabeanteil der Anzeige- und Eingabeeinrichtung 11 kann ein Anwender unterschiedliche Betriebszustände (oder auch Betriebsmodi oder Modi genannt) für den Akkumulator 1 ausgewählt und eingestellt werden. Zu den unterschiedlichen Betriebszuständen zählen beispielsweise bestimmte Lade- oder Entladezustände. Bei einem ersten auswählbaren Betriebszustand wird für den Akkumulator 1 ein CCCV-Ladeverfahren eingestellt. Bei einem zweiten auswählbaren Betriebszustand wird für den Akkumulator 1 ein Schnellladeverfahren eingestellt, bei dem mit relativ hohen Ladeströmen eine relativ kurze Ladezeit erreicht werden kann. Bei einem dritten auswählbaren Betriebszustand wird für den Akkumulator 1 ein langsames und schonendes Ladeverfahren eingestellt, bei dem mit relativ niedrigen Ladeströmen zwar eine relativ lange Ladezeit, aber auch ein für die Energiespeicherzellen 5 schonendes (d.h. wenig belastendes) Laden erreicht werden kann.

Das Ladegerät 2 enthält ein Ladegerät-Gehäuse 13, ein Ladegerät-Schnittstelle 14, eine Ladegerät-Speichereinrichtung 15 sowie eine Ladegerät-Steuerungseinrichtung 16.

Die Ladegerät-Steuerungseinrichtung 16 enthält eine Strommesseinrichtung 16a und eine Spannungsmesseinrichtung 16b.

Das Ladegerät-Gehäuse 13 enthält eine Oberseite 13a, eine Unterseite 13b, eine linke Seitenwand, eine rechte Seitenwand, eine Vorderseite 13c und eine Rückseite 13d. In Figur 1 ist lediglich die Oberseite 13a, Unterseite 13b, die Vorderseite 13c und die Rückseite 13d gezeigt.

Die Ladegerät-Schnittstelle 14 ist an der Oberseite 13a des Ladegerät-Gehäuses 13 positioniert und dient zum wiederlösbaren Verbinden des Ladegeräts 2 mit dem Akkumulator 1. Die Ladegerät-Schnittstelle 14 enthält hierzu eine mechanische Ankopplungseinrichtung, eine elektrische Verbindungseinrichtung sowie einen Kommunikationsanschluss. Weder die mechanische Ankopplungseinrichtung, die elektrische Verbindungseinrichtung noch der Kommunikationsanschluss der Ladegerät-Schnittstelle 14 sind in den Figuren gezeigt.

Die mechanische Ankopplungseinrichtung, die elektrische Verbindungseinrichtung und der Kommunikationsanschluss des Ladegeräts 2 sind zu der mechanischen Ankopplungseinrichtung, der elektrischen Verbindungseinrichtung und dem Kommunikationsanschluss des Akkumulators 1 korrespondierend ausgestaltet, sodass die Komponenten der Ladegerät-Schnittstelle 14 und der Akku-Schnittstelle 6 entsprechend miteinander verbunden werden können.

In den Figuren ist die mechanische Ankopplungseinrichtung, die elektrische Verbindungseinrichtung und der Kommunikationsanschluss der Ladegerät-Schnittstelle 14 nicht gezeigt.

Des Weiteren verfügt das Ladegerät 2 über ein Stromanschlusskabel 17, welches aus dem Ladegerät-Gehäuse 14 herausragt und mit der Ladegerät-Steuerungseinrichtung 16 verbunden ist. Das Stromanschlusskabel 17 dient zum wiederlösbaren Verbinden des Ladegeräts 2 mit einer Netzstromquelle (Steckdose).

Figur 2 zeigt den Akkumulator 1 wiederlösbar verbunden mit der Werkzeugmaschine 3. Wie bereits vorstehend beschriebenen Werkzeugmaschine 3 ist in Figur 2 als Akku-Schrauber ausgestaltet. Alternativ kann die Werkzeugmaschine 3 auch als Bohrhammer, Bohrmaschine, Säge, Schleifgerät oder dergleichen ausgestaltet sein. Die als Akku-Schrauber ausgestaltete Werkzeugmaschine 3 enthält im Wesentlichen ein Gehäuse 18, einen Handgriff 19 sowie eine Werkzeugaufnahme 20.

Das Gehäuse 18 der Werkzeugmaschine 2 enthält wiederum eine Oberseite 18a, eine Unterseite 18b, ein vorderes Ende 18c und ein hinteres Ende 18d. Im Inneren des Gehäuses 18 ist im Wesentlichen ein Antrieb 21, ein Getriebe 22, eine Abtriebswelle 23 und eine Steuervorrichtung 24 enthalten. Der Antrieb 21 ist als Elektromotor ausgestalte und dient zum Erzeugen eines Drehmoments. Wie in Figur 2 gezeigt ist der Antrieb 21, das Getriebe 22, die Abtriebswelle 23 und die Werkzeugaufnahme 20 so zueinander angeordnet, dass ein von dem Antrieb 21 erzeugtes Drehmoment über das Getriebe 22 und die Abtriebswelle 23 auf die Werkzeugaufnahme 20 übertragen werden kann.

An dem vorderen Ende 18c ist die Werkzeugaufnahme 20 positioniert, die zum Aufnehmen und Halten eines Werkzeugs 25 dient. Bei dem Werkzeug 25 handelt es sich um ein Schrauber-Bit.

Der Handgriff 19 dient zum Halten und Führen der Werkzeugmaschine 3 durch einen (nicht gezeigten) Anwender. Der Handgriff 19 enthält dabei ein oberes Ende 19a und ein unteres Ende 19b. Der Handgriff 19 ist mit dem oberen Ende 19a an der Unterseite 19b des Gehäuses 19 der Werkzeugmaschine 2 befestigt. An dem unteren Ende 19b des Handgriffs 19 ist eine Fussvorrichtung 26 mit einer Werkzeugmaschinen-Schnittstelle 27 positioniert.

Des Weiteren weist der Handgriff 19 einen Aktivierungsschalter 28 auf, der mit der Steuereinrichtung 24 verbunden ist. Durch den Aktivierungsschalter 28 kann ein Anwender die Werkzeugmaschine 2 je nach Positionierung des Aktivierungsschalter 28 in einen Aktivierungs-oder Deaktivierungszustand versetzen. In einem Aktivierungszustand erzeugt der Antrieb 21 ein Drehmoment.

Die Werkzeugmaschinen-Schnittstelle 27 dient zum wiederlösbaren Verbinden der Werkzeugmaschine 3 mit dem Akkumulator 1. Die Werkzeugmaschinen-Schnittstelle 27 enthält hierzu eine mechanische Ankopplungseinrichtung, eine elektrische Verbindungseinrichtung sowie einen Kommunikationsanschluss.

Die mechanische Ankopplungseinrichtung, die elektrische Verbindungseinrichtung und der Kommunikationsanschluss der Werkzeugmaschine 3 sind zu der mechanischen Ankopplungseinrichtung, der elektrischen Verbindungseinrichtung und dem Kommunikationsanschluss des Akkumulators 1 korrespondierend ausgestaltet, sodass die Komponenten der Werkzeugmaschine 3 und der Akku-Schnittstelle 6 entsprechend miteinander verbunden werden können.

In den Figuren ist die mechanische Ankopplungseinrichtung, die elektrische Verbindungseinrichtung und der Kommunikationsanschluss der Werkzeugmaschine 3 nicht gezeigt.

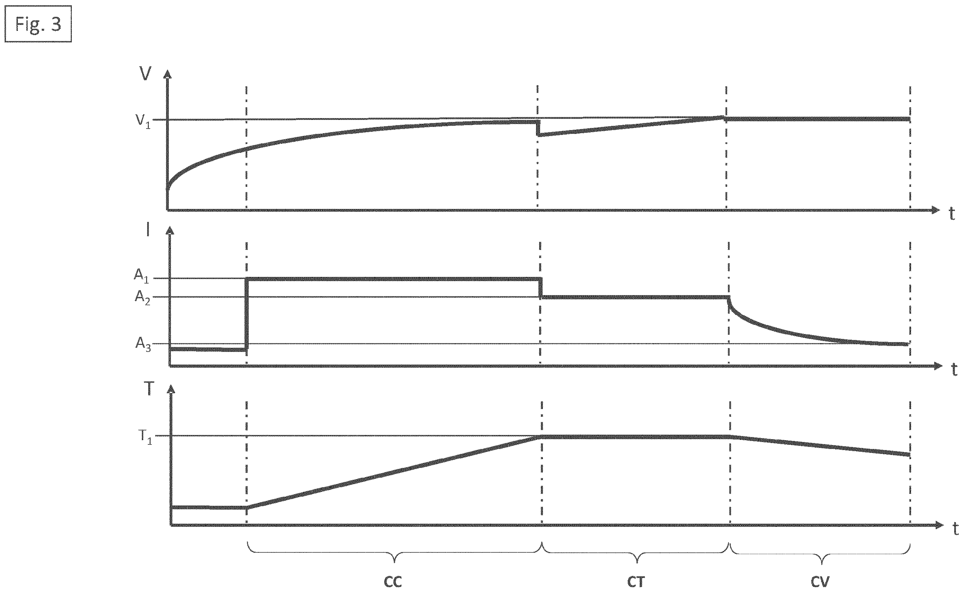

Figur 3 zeigt grafische Darstellungen eines zeitlichen Verlaufs des Spannungswertes (V - t), des (Lade-)Stromwertes (I - t) sowie des Temperaturwertes (T - t) während eines Ladevorgangs des Akkumulators. Der Verlauf des Spannungswertes und des Stromwertes entspricht dabei im Wesentlichen dem CCCV-Verfahren.

Zur Durchführung des Verfahrens wird zunächst der Akkumulator 1 mit dem Ladegerät 2 so verbunden, dass die entsprechenden mechanischen Ankopplungseinrichtungen, die elektrischen Verbindungseinrichtungen und die Kommunikationsanschlüsse des Akkumulators 1 und des Ladegeräts 2 miteinander gekoppelt sind. Durch die Kopplung der Kommunikationsanschlüsse des Akkumulators 1 und des Ladegeräts 2 werden Daten und Informationen bezüglich der Ladespezifikation bzw. Ladeparameter, insbesondere Schwellwerte für eine maximalen Ladestrom oder eine maximale Ladespannung zwischen dem Akkumulator 1 und dem Ladegerät 2 ausgetauscht.

Durch das Verbinden der elektrischen Verbindungseinrichtungen des Akkumulators 1 und des Ladegeräts 2 wird elektrische Energie von dem Ladegerät 2 zum Akkumulator 1 geleitet, wobei ein Wert für eine Ladestromstärke A₁ an dem Ladegerät 2 eingestellt ist. Der Wert für die Ladestromstärke A₁ bleibt für die Phase CC (constant current - konstante Stromstärke) im Wesentlichen unverändert. In dem vorliegenden Ausführungsbeispiel beträgt der Wert für die Ladestromstärke A₁ 18 A (=Amper). Der Wert für die Ladestromstärke A₁ bleibt bei 18A bis zum Ende der Phase CC und bis zum Beginn der Phase CT sowie bis zum Erreichen eines bestimmten Temperaturwertes für den Akkumulator 1. Wie bereits vorstehend beschrieben wird die Temperatur des Akkumulators 1 mit Hilfe des Temperatursensors 9 erfasst. In dem vorliegenden Ausführungsbeispiel beträgt der Temperaturwert T₁ im Wesentlichen 60°C, vgl. Figur 3. Ab der Phase CT (constant temperature = konstante Temperatur) wird die Temperatur des Akkumulators 1 im Wesentlichen auf 60°C gehalten. Zum Regulieren bzw. Regeln des Temperaturwertes wird die Ladestromstärke A₁ um einen gewissen Betrag erhöht oder reduziert. Je höher der Wert für die Ladestromstärke A₁, desto wärmer wird der Akkumulator bzw. desto höher steigt der Temperaturwert. Umgekehrt kann die Temperatur des Akkumulators durch ein Absenken des Wertes für die Ladestromstärke A₁ entsprechend reduziert werden. Die Phase CT entspricht einer vorbestimmbaren Zeitdauer. In dem vorliegenden Ausführungsbeispiel beträgt diese Zeitdauer zwischen 200 und 300 Sekunden. Alternativ kann diese Zeitdauer auch länger oder kürzer sein. Es ist zu beachten, dass innerhalb der Zeitdauer CT, wenn der Innenwiderstand der Energiespeicherzellen an geringsten ist, der Akkumulator 1 am schnellsten mit elektrischer Energie geladen werden kann. Es ist daher vorteilhaft die Zeitdauer CT so lange wie möglich auszudehnen, um den Akkumulator möglichst schnell zu laden und ohne Komponenten des Akkumulators 1 ggf. zu beschädigen. Darüber hinaus wird ab der Phase CT der Wert für die Ladestromstärke A₁ von 18 A auf einen Wert für die Ladestromstärke A₂ von 12 A reduziert. Wie in dem Grafen in Figur 3 ersichtlich, wird die Ladestromstärke negativ verzögert von 18 A auf 12 A reduziert. Es ist zu beachten, dass der Wert der Ladestromstärke A₂ zwei Drittel (d.h. 2/3) des Wertes der Ladestromstärke A₁ beträgt.

Zum Ende der Phase CT und mit dem Beginn der Phase CV (constant voltage = konstante Spannung) wird die Spannung zum Laden des Akkumulators auf einen konstanten Wert eingestellt. In dem vorliegenden Ausführungsbeispiel beträgt der Spannungswert in der Phase CV im Wesentlichen 4,2 V. Des Weiteren wird zu Beginn der Phase CV der Wert für die Ladestromstärke A₁ stetig von 12 A auf einen Wert für eine Ladestromstärke A₃ von 5 A reduziert. Ferner reduziert sich die Temperatur von einem maximalen Temperaturwert T₁ von 60°C auf einem Wert von 55°C.

Das Einstellen des Wertes für die Ladestromstärke A₁, A₂ erfolgt dabei durch ein entsprechendes Signal von dem Akkumulator 1 über die Kommunikationsanschlüsse an das Ladegerät 2. Die Ladespannung V₁ wird mit Hilfe der Spannungsmesseinrichtung 8 des Akkumulators 1 eingestellt und geregelt. Alternativ kann die Ladespannung mit Hilfe der Spannungsmesseinrichtung 16b des Ladegeräts 2 erfasst werden. Der erfasste Wert für die Ladespannung wird in der Akku-Speichereinrichtung 10 gespeichert. Alternativ kann der erfasste Wert für die Ladespannung in der Ladegerät-Speichereinrichtung 15 gespeichert werden.

Das vorstehende erfindungsgemäße Verfahren beschreibt einen Ladevorgang des Akkumulators 1 an dem Ladegerät 2. Das erfindungsgemäße Verfahren kann jedoch auch für einen Entladevorgang des Akkumulators 1 als Energieversorgung an einer Werkzeugmaschine 3 verwendet werden.

Das Verfahren bei einem Entladevorgang des Akkumulators 1 ist dem Ladevorgang des Akkumulators 1 nahezu identisch. Im Gegensatz zu dem Verfahren bei dem Ladevorgang des Akkumulators 1 gelangt bei dem Entladevorgang elektrische Energie von dem Akkumulator 1 zu der Werkzeugmaschine 3.

### Bezugszeichenliste

- 1: Akkumulator
- 2: Ladegerät
- 3: Werkzeugmaschine
- 4: Akku-Gehäuse
- 4a: Oberseite des Akku-Gehäuses
- 4b: Unterseite des Akku-Gehäuses
- 4c: Vorderseite des Akku-Gehäuses
- 4d: Rückseite 4d des Akku-Gehäuses
- 5: Energiespeicherzelle
- 6: Akku-Schnittstelle
- 7: Strommesseinrichtung des Akkumulators
- 8: Spannungsmesseinrichtung des Akkumulators
- 9: Temperatursensor des Akkumulators
- 10: Akku-Speichereinrichtung
- 11: Anzeige- und Eingabeeinrichtung
- 12: Akku-Steuerungseinrichtung
- 13: Ladegerät-Gehäuse
- 13a: Oberseite des Ladegerät-Gehäuses
- 13b: Unterseite des Ladegerät-Gehäuses
- 13c: Vorderseite des Ladegerät-Gehäuses
- 13d: Rückseite des Ladegerät-Gehäuses
- 14: Ladegerät-Schnittstelle
- 15: Ladegerät-Speichereinrichtung
- 16: Ladegerät-Steuerungseinrichtung
- 16a: Strommesseinrichtung
- 16b: Spannungsmesseinrichtung
- 17: Stromanschlusskabel
- 18: Gehäuse der Werkzeugmaschine
- 18a: Oberseite des Werkzeugmaschinengehäuses
- 18b: Unterseite des Werkzeugmaschinengehäuses
- 18c: vorderes Ende des Werkzeugmaschinengehäuses
- 18d: hinteres Ende des Werkzeugmaschinengehäuses
- 19: Handgriff
- 20: Werkzeugaufnahme
- 21: Antrieb
- 22: Getriebe
- 23: Abtriebswelle
- 24: Steuervorrichtung
- 25: Werkzeug
- 26: Fussvorrichtung
- 27: Werkzeugmaschinen-Schnittstelle
- 28: Aktivierungsschalter

## Patentansprüche

1. Verfahren zum Steuern und Regeln eines Akkumulators (1) zur Versorgung einer Werkzeugmaschine (2) mit elektrischer Energie, wobei der Akkumulator (1) wenigstens eine Energiespeicherzelle (5), wenigstens einen Temperatursensor (9) zum Erfassen wenigstens eines Temperaturwertes des Akkumulators (1), eine Strommesseinrichtung (7), eine Spannungsmesseinrichtung (8) sowie eine Akku-Steuerungseinrichtung (12) mit wenigstens einer Akku-Speichereinrichtung (10) enthält,
**gekennzeichnet durch** die Verfahrensschritte
- Einstellen eines ersten Ladestromwertes (A₁) zum Laden des Akkumulators (1);
- Laden des Akkumulators (1) mit dem ersten Ladestromwert bis zum Erreichen eines ersten Temperaturwertes (T₁);
- Einstellen eines zweiten Ladestromwertes (A₂) zum Laden des Akkumulators (1) zum Halten des ersten Temperaturwertes (T₁) für eine erste vorbestimmte Zeitdauer (CV);
- Einstellen eines dritten Ladestromwertes (A₃) zum Laden des Akkumulators (1) nach Ablauf einer zweiten vorbestimmten Zeitdauer (CV); und
- Einstellen eines ersten Spannungswertes (Vi) nach Ablauf der zweiten vorbestimmten Zeitdauer (CV).

2. Verfahren nach Anspruch 1,
**dadurch gekennzeichnet, dass** bei dem ersten Temperaturwert (T₁) die Energiespeicherzellen (5) den geringsten Innenwiderstand aufweisen.

3. Verfahren nach Anspruch 1 oder 2,
**dadurch gekennzeichnet, dass** der erste Ladestromwert (A₁) einem Wert zwischen 16 und 20 A, insbesondere 18 A entspricht.

4. Verfahren nach wenigstens einem der Ansprüche 1 bis 3,
**dadurch gekennzeichnet, dass** der zweite Ladestromwert (A₂) einem Wert zwischen 10 und 14 A, insbesondere 12 A entspricht.

5. Verfahren nach wenigstens einem der Ansprüche 1 bis 4
**dadurch gekennzeichnet, dass** der erste Temperaturwert Ladestromwert (T₁) zwischen 55°C und 65°C, insbesondere 60°C entspricht.

6. Akkumulator (1) zum Durchführen des Verfahrens nach wenigstens einem der Ansprüche 1 bis 5,
**dadurch gekennzeichnet, dass** der Akkumulator (1) wenigstens eine Energiespeicherzelle (5), wenigstens einen Temperatursensor (9), eine Strommesseinrichtung (7), eine Spannungsmesseinrichtung (8) sowie eine Akku-Steuerungseinrichtung (12) mit wenigstens einer Akku-Speichereinrichtung (10) enthält.

7. Ladegerät (2) zum Durchführen des Verfahrens nach wenigstens einem der Ansprüche 1 bis 5,
**dadurch gekennzeichnet, dass** das Ladegerät (2) eine Ladegerät-Steuerungseinrichtung (16) mit wenigstens einer Ladegerät-Speichereinrichtung (15) enthält.
